# FASCICULE DE BREVET EUROPEEN

(11) **EP 1 707 487 B1**
(45) Date de publication et mention de la délivrance du brevet: **21.11.2007**
(21) Numéro de dépôt: 06111744.6
(22) Date de dépôt: 27.03.2006
(51) Int. Cl.: B64D 27/26

(54) **Suspension arrière de turboréacteur**
Hinteraufhängung für ein Strahltriebwerk
Rear suspension for turbojet engine

(30) Priorité: 29.03.2005 FR 0550803
(43) Date de publication de la demande: 04.10.2006
(73) Titulaire: SNECMA, 75015 Paris (FR)
(72) Inventeur: Dron, Sébastien, 92120, Montrouge (FR); Guibert, Thibaut, 75012, Paris (FR); Prudhomme, Grégory, 76600, Le Havre (FR); Tesniere, Marc, 91750, Champcueil (FR)
(74) Mandataire: David, Daniel

(56) Documents cités:
- EP-A- 0 744 338
- US-A- 5 860 623

## Description

La présente invention concerne le domaine des turboréacteurs et vise la suspension de ces derniers à la structure de l'avion qu'ils propulsent.

Un moteur de propulsion, tel qu'un turboréacteur, peut être monté en divers endroits de l'avion par accrochage à un mât ou un pylône appartenant à la structure de ce dernier. Il peut être ainsi suspendu sous la voilure, fixé au fuselage, généralement à l'arrière, ou monté dans l'empennage par des moyens d'accrochage appropriés. Ces moyens d'accrochage ont pour fonction d'assurer la transmission des efforts mécaniques entre le moteur et la structure de l'avion. Les charges à prendre en considération sont orientées selon les trois directions principales d'un référentiel lié au moteur. Ce sont notamment le poids du moteur selon l'axe vertical Z, sa poussée selon l'axe X du moteur, et les charges aérodynamiques latérales selon l'axe Y transversal. Les charges à transmettre comprennent aussi la reprise du couple de rotation autour de l'axe du moteur. Ces moyens doivent en outre absorber, sans les transmettre au mât, les déformations subies par le moteur pendant les différentes phases du vol résultant par exemple des variations dimensionnelles dues aux dilatations ou contractions thermiques.

La liaison entre le moteur et le mât est assurée en général pour les moteurs à soufflante, par deux plans de suspension, l'un à avant du moteur au niveau du carter intermédiaire, l'autre à l'arrière. Chacun des moyens de suspension est agencé pour transmettre une partie des efforts. Par exemple une des suspensions assure la reprise ou transfert d'efforts latéraux selon l'axe Y et verticaux selon l'axe Z, ainsi que celle du couple moteur autour de l'axe X. L'autre suspension assure la transmission au mât de l'avion de la poussée et également les efforts latéraux et verticaux. Une telle suspension est isostatique.

Généralement un moyen de suspension comprend une poutre, éventuellement double, fixée au mât par des boulons et reliée au carter du moteur par des biellettes. Les biellettes tourillonnent à leurs extrémités sur des chapes ou pattes, selon le montage, qui sont solidaires respectivement du carter moteur et de la poutre. Afin que la transmission des efforts par les biellettes soit purement axiale, c'est-à-dire le long de l'axe des biellettes, on prévoit un palier de type à rotule pour les axes traversants, à chaque extrémité des biellettes. Ce montage permet notamment d'absorber les dilatations radiales et axiales du moteur.

Les contraintes liées à la sécurité imposent par ailleurs la présence de moyens palliant la défaillance d'un organe de transmission des efforts. Sur ces suspensions on prévoit, ainsi généralement dans ce but des moyens de liaison avec jeu, dits en attente, qui deviennent actifs par absorption du jeu et transmettent les efforts par une voie de secours, si l'une des transmissions devient défaillante par suite d'une rupture de pièce.

On connaît par le brevet US 5860623 une suspension arrière de turbo réacteur à un mât d'avion comprenant une poutre transversale par rapport à l'axe du moteur reliée par trois bielles au carter de ce dernier. La poutre comprend une platine avec des moyens de fixation par boulonnage au mât. On distingue une première et une seconde bielles latérales reliées chacune par un premier axe à la poutre et par un deuxième axe à une ferrure solidaire du carter moteur. Ces bielles sont disposées de part et d'autre de l'axe du moteur. Une bielle centrale est disposée entre les deux bielles latérales et est reliée également par un premier axe à la poutre et par un deuxième axe à la ferrure. En fonctionnement normal ces trois bielles ont pour fonction de transmettre au mât les efforts orientés verticalement et latéralement ainsi que le couple moteur.

Une des deux bielles latérales comprend un doigt la prolongeant du côté du premier axe. Ce doigt est logé avec jeu dans un orifice ménagé dans une nervure de la poutre. Cette nervure est perpendiculaire au plan de rotation de la bielle et le jeu est suffisant pour qu'en fonctionnement normal, les mouvements de la bielle ne soient pas bloqués. Le montage est isostatique. En cas de rupture d'une liaison de la première bielle ou de la bielle centrale, le jeu est consommé par basculement du moteur autour des axes des deux autres bielles et la liaison reste isostatique. Les autres bielles reprennent le transfert de l'ensemble des efforts sur cette suspension.

Il existe une seconde liaison de sécurité en attente entre la bielle centrale et le carter moteur sous la forme d'un axe de liaison traversant à la fois la bielle centrale et une chape solidaire du carter du moteur. Cet axe est monté avec jeu sur l'un ou l'autre de la bielle ou de la chape. Ce jeu est consommé de la même façon que précédemment lorsque l'une des autres liaisons vient à se rompre, et les efforts transitent alors par les liaisons restantes.

La demanderesse s'est fixé comme objectif la réalisation d'une suspension remplissant les mêmes fonctions que celles présentées dans le brevet ci-dessus mais de fabrication plus simple tout en satisfaisant aux contraintes de robustesse et de fiabilité.

Conformément à l'invention, la suspension d'un turboréacteur à un mât d'avion comprenant une poutre avec une platine pourvue de moyens de fixation audit mât disposée transversalement par rapport à l'axe du moteur, une première et une seconde bielles latérales liées chacune par un premier axe à la poutre et par un deuxième axe au carter du moteur, la seconde bielle latérale étant prolongée du côté du premier axe par un doigt logé avec jeu dans une cavité ménagée dans la poutre de manière à former une liaison de sécurité en attente, une bielle centrale disposée entre les deux bielles latérales liée par un premier axe à la poutre et par un deuxième axe au dit carter, est caractérisée par le fait que la poutre comprenant une chape pour loger le premier axe de liaison de la bielle centrale, le dit premier axe est distant de la platine de façon à ce qu'un espace soit ménagé entre la platine et la bielle centrale, cet espace formant ladite cavité dans laquelle le doigt de la seconde bielle latérale est logé avec jeu en fonctionnement normal.

L'invention présente l'avantage d'éviter l'incorporation d'une nervure spécifique et son usinage pour réaliser le logement de la liaison en attente. Cette solution est avantageuse en terme de coût mais aussi de masse.

Conformément à une autre caractéristique, la bielle centrale est liée par un troisième axe à la poutre de manière à former une liaison en attente. Cette liaison en attente devient active lorsqu'en particulier le premier axe de liaison de cette biellette centrale est rompu. Dans ce cas la suspension peut rester isostatique.

Conformément à une autre caractéristique, les chapes supportant les premiers axes de liaison des deux bielles latérales et de la bielle centrale forment ensemble une pièce de section en U avec la platine. La solution de l'invention permet en effet de réaliser une poutre dont la géométrie simplifiée permet une fabrication par usinage économique.

On décrit maintenant l'invention plus en détail en référence aux dessins annexés qui montrent un mode de réalisation non limitatif et sur lesquels :
La figure 1 représente de façon schématique la suspension d'un turboréacteur à un avion,
La figure 2 représente une vue en perspective de la suspension de l'invention, les bielles étant en position mais les axes n'étant pas représentés,
La figure 3 montre la suspension vue de face,
La figure 4 est une vue en coupe selon 4-4 de la figure 3,
La figure 5 est une vue en coupe selon 5-5 de la figure 4,
Les figures 6 à 9 illustrent le fonctionnement des liaisons de sécurité en attente dans les différentes situations de rupture d'axes.

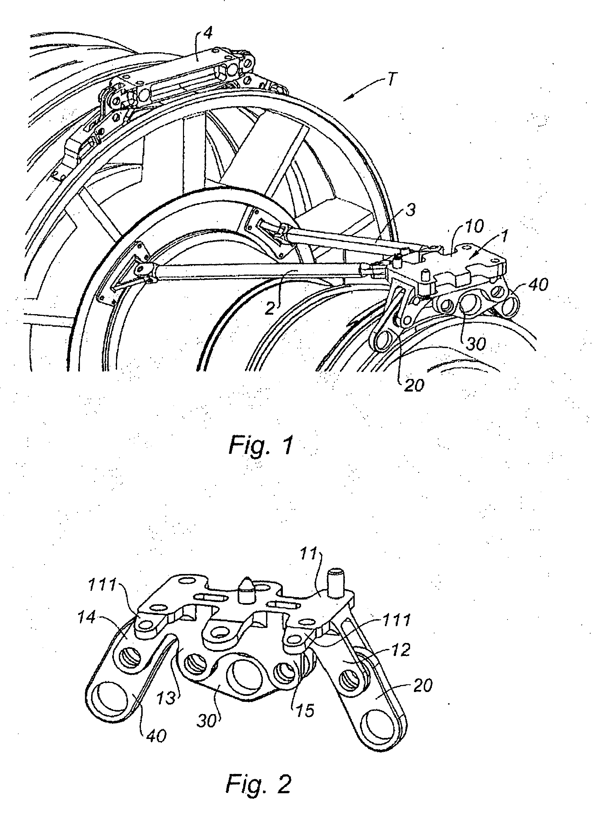

La figure 1 représente, vu de trois-quarts arrière, un turboréacteur T équipé de ses moyens d'accrochage à un mât d'avion qui n'est pas représenté. Il peut s'agir notamment de l'accrochage à l'aile d'un avion. Selon ce mode de suspension, le moteur comprend un dispositif d'attache 4 à l'avant du moteur, fixé sur le carter intermédiaire de la soufflante. Il comporte aussi un moyen d'attache 1 à l'arrière, fixé au carter d'échappement du flux primaire. La reprise de la poussée est assurée par deux barres 2 et 3 disposées longitudinalement de part et d'autre de l'axe du moteur et accrochées à leurs extrémités, d'une part au moyeu du carter de la soufflante et à l'attache arrière d'autre part.

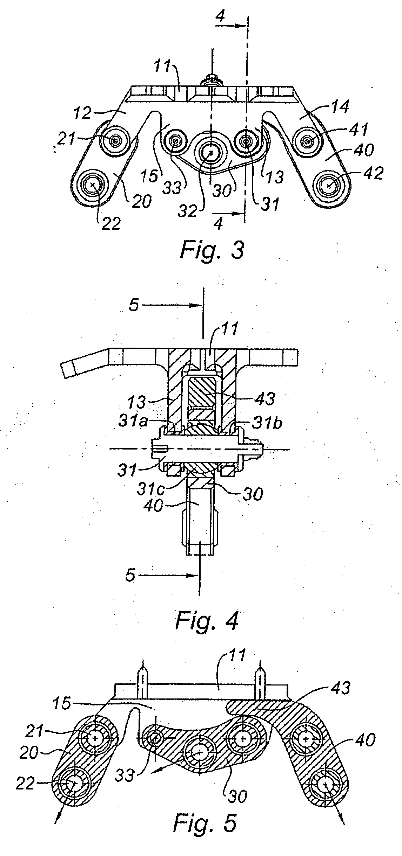

La description qui suit concerne l'attache arrière 1. Comme on le voit sur les figures 2 et 3, l'attache comprend une poutre 10 de fixation au mât ou pylône de l'avion et trois bielles 20, 30, 40 reliant la poutre 10 aux chapes solidaires du carter moteur. Ces chapes ne sont pas représentées.

La poutre 10 comprend une platine 11 pourvue de logements pour le passage de moyens de fixation appropriés, tels que des boulons, au mât. Ces moyens sont en soi connus. La poutre est disposée perpendiculairement à l'axe du moteur. Sa face tournée vers l'amont du moteur, par rapport au sens de l'écoulement des gaz, comprend des pattes 111 pour la fixation des barres 2 et 3 de transmission de la poussée. Cela est aussi connu en soi.

La poutre 10 est également pourvue de chapes 12, 13, 14, et 15 pour le logement des axes de retenue et d'articulation des trois bielles 20, 30, 40. Ces chapes comprennent une oreille amont et une oreille aval par rapport à la direction d'écoulement des gaz. Les différentes oreilles amont sont avantageusement dans un même plan perpendiculaire à celui de la platine 11. De même les oreilles aval sont dans un même plan parallèle à celui des oreilles amont. Cette disposition permet de réaliser une poutre de forme relativement simple puisqu'elle est composée sensiblement de trois plans : un premier formant la platine, une second formant les oreilles amont et un troisième formant les oreilles aval. L'usinage d'une telle pièce est plus simple que dans les réalisations de l'art antérieur.

La première bielle latérale 20 est articulée sur la chape 12 en étant montée sur un premier axe 21 qui la traverse ainsi que les deux oreilles de la chape 12. La bielle 20 est articulée par un second axe de liaison 22, à son autre extrémité, sur une chape non représentée, solidaire de la ferrure de carter moteur.

La seconde bielle latérale 40 est articulée de la même façon sur la chape 14 en étant montée sur un premier axe de liaison 41 qui la traverse ainsi que les deux oreilles de la chape 14. La bielle est articulée à son autre extrémité par un second axe de liaison 42, sur une chape non représentée, solidaire de la ferrure de carter moteur.

La troisième bielle dite centrale 30 est disposée entre les deux bielles latérales dans un même plan transversal que ces dernières. Cette bielle 30 est articulée de la même façon sur la chape 13 en étant montée sur un premier axe 31 qui la traverse ainsi que les deux oreilles de la chape 13. La bielle est articulée également par un second axe de liaison 32, à distance du premier axe 31 sur une chape non représentée, solidaire de la ferrure de carter moteur.

Comme on le voit sur la coupe de la figure 4, faite au niveau de la liaison par l'axe 31, ce dernier est logé dans des alésages percés dans les deux oreilles de la chape 13 et la bielle 30, par l'intermédiaire de douilles 31a 31b et 31c respectivement. La surface extérieure de la douille 31c est sphérique. La bielle 30 peut donc pivoter non seulement autour de l'axe 31 mais aussi autour de tout axe qui lui est perpendiculaire et passant par le centre de la douille 31c. Il s'agit d'une liaison à rotule en soi bien connue.

Bien que seule la liaison avec l'axe 31 soit illustrée sur les figures, les autres liaisons des bielles avec respectivement les axes 21, 41 ; 22 ; 32 ; 42 sont également de type à rotule. Ces liaisons sont nécessaires dans la mesure où l'on souhaite que la transmission des efforts passe par l'axe des bielles seulement, et que la suspension soit isostatique.

On décrit maintenant les liaisons de sécurité en attente.

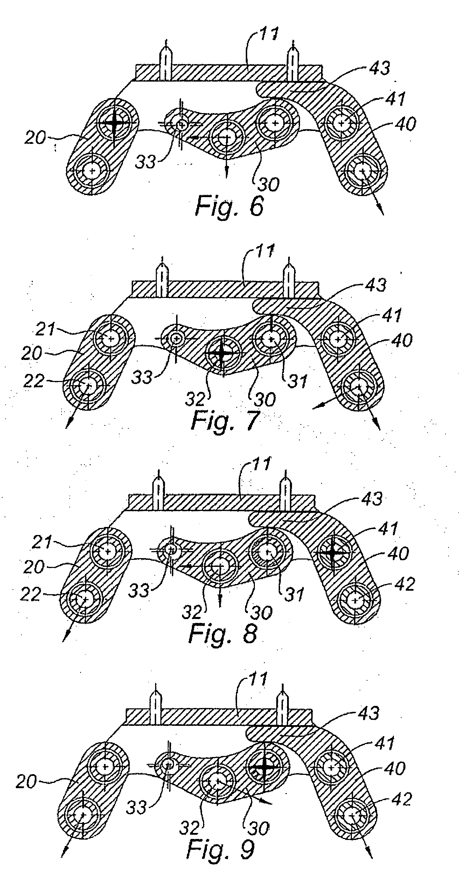

La seconde bielle 40 est prolongée du côté du premier axe 41 par un doigt 43 qui forme un angle avec celle-ci comme on le voit sur la figure 5. Ce doigt 43 comprend une portion qui vient se loger entre l'extrémité de la bielle centrale 30, côté de son premier axe 31, et la platine 11. La figure 4 montre également la position de la portion de doigt 43, en fonctionnement normal. Un premier jeu est ménagé entre la tête de la bielle centrale et le doigt. Un second jeu est ménagé entre le doigt et la platine. En fonctionnement normal pendant toutes les phases de fonctionnement du moteur ces jeux sont conservés. La forme du doigt et celle de la tête de bielle permettent que leur positionnement angulaire relatif varie dans le cadre du fonctionnement normal sans que ces jeux soient consommés.

Une deuxième liaison de sécurité en attente est fournie par la liaison entre la bielle centrale 30 et un axe de sécurité en attente 33. Cet axe 33 traverse les oreilles de la chape 15 et un bras de la bielle centrale 30. Ce bras est situé du côté du second axe de liaison de la bielle centrale. La bielle 30 a ainsi sensiblement la forme d'un V comme on le voit sur la figure. A la différence des autres axes, en fonctionnement normal, aucun effort n'est transmis par cet axe 33, en raison d'un jeu qui est ménagé entre l'axe et l'une ou l'autre de la bielle centrale 30 et de la chape 15.

On montre le fonctionnement des liaisons de sécurité en regard des figures 6 à 9. La partie défaillante est indiquée par une croix.

La figure 6 illustre le cas où la transmission des efforts par la première bielle latérale 20 est rompue. Le jeu au niveau de l'axe 33 en attente est alors consommé. La bielle centrale 30 forme une liaison rigide. On a représenté par des flèches la direction des composantes des efforts transmis par les deux bielles actives. La transmission perdue par la bielle latérale est reprise par la bielle centrale.

La figure 7 montre le cas où le deuxième axe 32 de la bielle centrale vient à rompre. La liaison en attente entre le doigt 43 et la poutre devient active par consommation du jeu. La transmission perdue par la bielle centrale est reprise par la seconde bielle latérale 40. Les flèches représentent la direction des composantes des efforts transmis par les deux bielles actives

La figure 8 montre le cas où la transmission par la seconde bielle latérale 40 est perdue. Le jeu de la deuxième liaison 33 en attente, sur la bielle centrale 30, est consommé. Elle devient active. Les efforts sur les liaisons sont repris par la bielle centrale.

La figure 9 montre le cas où la rupture de la bielle centrale 30 est du côté poutre. Le jeu de la seconde liaison 33 en attente est consommé. Cette liaison devient active.

## Revendications

1. Suspension d'un turboréacteur à un mât d'avion comprenant
une poutre (10) avec une platine (11) pourvue de moyens de fixation permettant de fixer ledit mât disposée transversalement par rapport à l'axe du moteur,
une première (20) et seconde (40) bielles latérales liées chacune par un premier axe (21, 41) à la poutre (10) et pouvant être liées chacune par un deuxième axe (22, 42) au carter du moteur, la seconde bielle latérale (40) étant prolongée du côté du premier axe par un doigt (43) logé avec jeu dans une cavité ménagée dans la poutre de manière à former une liaison de sécurité en attente
une bielle centrale (30) disposée entre les deux bielles latérales (20, 40) liée par un premier axe (31) à la poutre et pouvant être liée par un deuxième axe (32) au dit carter,
la poutre comprenant une chape (13) pour loger le premier axe (31) de liaison de la bielle centrale (30), **caractérisée par le fait que** le dit premier axe est distant de la platine (11) de façon à ce qu'un espace soit ménagé entre la platine (11) et la bielle centrale (30), cet espace formant ladite cavité dans laquelle le doigt (43) de la seconde bielle latérale (40) est logé avec jeu en fonctionnement normal.

2. Suspension selon la revendication précédente dont le dit jeu est consommé quand la transmission des efforts par le deuxième axe (32) de la bielle centrale est rompue.

3. Suspension selon la revendication 1 ou 2 dont la bielle centrale (30) est liée par un troisième axe (33) avec à la poutre (10) de manière à former une seconde liaison en attente.

4. Suspension selon la revendication 3 dont le jeu de la seconde liaison en attente est consommé lorsque la transmission des efforts par la première bielle latérale (20) ou la seconde bielle latérale (40) est rompue.

5. Suspension selon la revendication 3 dont le jeu de la seconde liaison en attente est consommé lorsque la transmission des efforts par le premier axe (31) de la bielle centrale est rompue.

6. Suspension selon l'une des revendications précédentes dont les chapes (12, 13, 14) supportant les premiers axes (21, 41, 31) de liaison des deux bielles latérales (20, 40) et de la bielle centrale (31) forment ensemble une pièce de section en U avec la platine.

7. Suspension selon l'une des revendications précédentes dont les liaisons des bielles (20, 30, 40) avec la poutre ou le carter sont à rotule.

## Claims

1. Suspension for suspending a jet engine on an aircraft strut, comprising
a beam (10) having a platform (11) provided with means enabling the fastening of the said strut and arranged transversely with respect to the axis of the engine,
first (20) and second (40) lateral links each connected by a first pin (21, 41) to the beam (10) and being able to be connected by a second pin (22, 42) to the engine casing, the second lateral link (40) being prolonged in the region of the first pin by a finger (43) housed with clearance in a cavity provided in the beam so as to form a standby safety connection, and
a central link (30) arranged between the two lateral links (20, 40) and connected by a first pin (31) to the beam and being able to be connected by a second pin (32) to the said casing,
the beam comprising a clevis (13) for housing the first connecting pin (31) of the central link (30), **characterized by** the fact that the said first pin is distant from the platform (11) so that a space is provided between the platform (11) and the central link (30), this space forming the said cavity in which the finger (43) of the second lateral link (40) is housed with clearance in normal operation.

2. Suspension according to the preceding claim, in which the said clearance is eliminated when the transmission of the forces by the second pin (32) of the central link is interrupted.

3. Suspension according to Claim 1 or 2, in which the central link (30) is connected by a third pin (33) to the beam (10) so as to form a second standby connection.

4. Suspension according to Claim 3, in which the clearance of the second standby connection is eliminated when the transmission of the forces by the first lateral link (20) or the second lateral link (40) is interrupted.

5. Suspension according to Claim 3, in which the clearance of the second standby connection is eliminated when the transmission of the forces by the first pin (31) of the central link is interrupted.

6. Suspension according to anyone of the preceding Claims, in which the clevises (12, 13, 14) supporting the first connecting pins (21, 41, 31) of the two lateral links (20, 40) and of the central link (31) together form a piece of U-shaped cross section with the platform.

7. Suspension according to anyone of the preceding Claims, in which the connections of the links (20, 30, 40) with the beam or the casing are swivel-type connections.

## Patentansprüche

1. Aufhängung eines Turbotriebwerks an einem Stiel eines Flugzeugs, bestehend aus einem Träger (10) mit einer Platte (11), der mit Befestigungsmitteln versehen ist, mittels derer dieser Stiel befestigt werden kann, und der quer zur Motorachse angeordnet ist,
- eine erste seitliche Stange (20) und eine zweite seitliche Stange (40), die jeweils durch eine erste Achse (21, 41) mit dem Träger (10) verbunden sind und jeweils durch eine zweite Achse (22, 42) mit dem Motorgehäuse verbunden werden können, wobei die zweite seitliche Stange (40) auf der Seite der ersten Achse durch einen Finger (43) verlängert wird, der mit Spiel in einem Hohlraum Aufnahme findet, welcher dergestalt in dem Träger ausgeführt ist, dass er eine Sicherheitsverbindung in Wartestellung bildet,
- einer zentralen Stange (30), die zwischen den beiden seitlichen Stangen (20, 40) angeordnet ist, durch eine erste Achse (31) mit dem Träger verbunden ist und durch eine zweite Achse (32) mit dem genannten Gehäuse verbunden werden kann,
wobei der Träger ein Gabelgelenk (13) aufweist, um die erste Verbindungsachse (31) der zentralen Stange (30) aufzunehmen,
**dadurch gekennzeichnet,**
**dass** diese erste Achse dergestalt von der Platte (11) beabstandet ist, dass ein Zwischenraum zwischen der Platte (11) und der zentralen Stange (30) gebildet wird, wobei dieser Zwischenraum den genannten Hohlraum bildet, in dem der Finger (43) der zweiten seitlichen Stange (40) im Normalbetrieb mit Spiel Aufnahme findet.

2. Aufhängung nach dem vorherigen Anspruch, bei der das genannte Spiel verbraucht wird, wenn die Übertragung der Kräfte durch die zweite Achse (32) der zentralen Stange unterbrochen wird.

3. Aufhängung nach Anspruch 1 oder 2, bei der die zentrale Stange (30) durch eine dritte Achse (33) mit dem Träger (10) verbunden ist, so dass eine zweite Verbindung in Wartestellung gebildet wird.

4. Aufhängung nach Anspruch 3, bei der das Spiel der zweiten Verbindung in Wartestellung verbraucht wird, wenn die Übertragung der Kräfte durch die erste seitliche Stange (20) oder die zweite seitliche Stange (40) unterbrochen wird.

5. Aufhängung nach Anspruch 3, bei der das Spiel der zweiten Verbindung in Wartestellung verbraucht wird, wenn die Übertragung der Kräfte durch die erste Achse (31) der zentralen Stange unterbrochen wird.

6. Aufhängung nach einem der vorherigen Ansprüche, bei der die Gabelgelenke (12, 13, 14), die die ersten Verbindungsachsen (21, 41, 31) der beiden seitlichen Stangen (20, 40) und der zentralen Stange (30) halten, mit der Platte zusammen ein Werkstück mit U-förmigem Querschnitt bilden.

7. Aufhängung nach einem der vorherigen Ansprüche, bei der die Verbindungen der Stangen (20, 30, 40) mit dem Träger oder dem Gehäuse Kugelgelenkverbindungen sind.
